# FASCICULE DE BREVET EUROPEEN

(11) **EP 4 666 193 B1**
(45) Date de publication et mention de la délivrance du brevet: **11.11.2026**
(21) Numéro de dépôt: 24714233.4
(22) Date de dépôt: 12.02.2024
(51) Int. Cl.: G06F 21/30, H04L 9/32, H04L 9/40, H04W 12/06

(54) **DISPOSITIF D'AUTHENTIFICATION D'UN UTILISATEUR**
VERFAHREN ZUR AUTHENTIFIZIERUNG EINES BENUTZERS
METHOD FOR AUTHENTICATING A USER

(30) Priorité: 15.02.2023 FR 2301424
(43) Date de publication de la demande: 24.12.2025
(73) Titulaire: Banks and Acquirers International Holding, 92150 Suresnes (FR)
(72) Inventeur: QUENTIN, Pierre, 92150 Suresnes (FR); MARCON, Jérôme, 92150 Suresnes (FR); CASTINEL, Audrey, 92150 Suresnes (FR); LIJOUR, Tristan-Aurélien, 92150 Suresnes (FR); CORMIER, Julien, 92150 Suresnes (FR); NOIZET, Loïc, 92150 Suresnes (FR)
(74) Mandataire: Germain Maureau
(86) Numéro de dépôt international: PCT/FR2024/050190
(87) Numéro de publication internationale: WO 2024/170852

(56) Documents cités:
- WO-A1-2016/153207
- WO-A1-2017/091558
- US-A1- 2018 158 060
- US-A1- 2020 204 541
- GUERAR MERIEM MERIEM GUERAR@UNIGE IT ET AL: "CirclePIN", ACM TRANSACTIONS ON CYBER-PHYSICAL SYSTEMS, ACM, 2 PENN PLAZA, SUITE 701 NEW YORK NY 10121-0701 USA, vol. 4, no. 3, 12 March 2020 (2020-03-12), pages 1 - 19, XP058676361, ISSN: 2378-962X, DOI: 10.1145/3365995

## Description

### DOMAINE TECHNIQUE GÉNÉRAL

La présente invention se rapporte au domaine de l'authentification, et en particulier dans le cadre de la réalité virtuelle ou mixte. Plus précisément, elle concerne un dispositif d'authentification d'un utilisateur, en particulier d'un utilisateur d'un système de réalité virtuelle ou mixte.

### ETAT DE L'ART

On connait des environnements artificiellement générés par des ordinateurs pouvant être perçus en réalité virtuelle (ou mixte, i.e. coexistant avec le monde réel) et notamment le « métavers » qui serait un monde virtuel persistant, partagé, et présenté comme le futur d'internet.

Pour interagir dans un tel univers, un utilisateur utilise un casque de réalité virtuel (VR), ou le cas échéant de réalité mixte (MR).

Ce type de casque fonctionne classiquement en appairage avec deux contrôleurs (ou manettes), tenus à chaque main par l'utilisateur. Un contrôleur sert en premier lieu à l'interactivité : il fait office de dispositif de pointage, et expose par ailleurs différents boutons mécaniques, assignables chacun à une fonction d'interactivité spécifique, suivant le choix de l'application VR.

Ce type de casque et les contrôleurs sont en outre équipés de capteurs de mouvement (typiquement des accéléromètres), dédiés au suivi de la vision, au suivi des mains et à la gestion de la zone de déplacement physique.

Dans certains modèles, l'utilisateur peut alternativement se passer des contrôleurs, et utiliser ses mains libres pour interagir avec l'application (on a alors par exemple des caméras externes fixes qui observent ses mains).

Dans ces environnements, il est parfois nécessaire d'obtenir une preuve de consentement de l'utilisateur, et pour cela de vérifier son identité, par exemple pour une validation de transaction, et en particulier de paiement (si l'utilisateur achète un objet, réel ou virtuel, dans le métavers).

On peut utiliser des techniques classiques comme un code PIN ou un mot de passe, par exemple via un smartphone appairé, mais il faut ôter puis remettre le casque, ce qui est contraignant.

Les facteurs d'authentification biométriques (voix, iris, empreinte digitale) pourraient étoffer ces mécanismes dans un avenir plus ou moins proches, mais ils nécessitent des moyens d'acquisition dédiés (par exemple un scanner d'empreinte sur le contrôleur), et il n'y a pas d'implémentation connue. On note que les casques présentent des capteurs oculaires, mais ils se limitent à la fonction simple d'oculométrie (« eye tracking ») et ils sont loin d'avoir les performances qui permettraient de la reconnaissance d'iris. Le document US 2020/204541 divulgue une méthode d'authentification à deux facteurs, où un utilisateur est invité à effectuer une action, un mouvement ou un geste avec un objet réel.

Alternativement, une façon naturelle d'obtenir le consentement de l'utilisateur dans l'espace virtuel est de lui demander d'exécuter un geste particulier. La méthode est d'autant plus intéressante si chaque utilisateur a une manière caractéristique d'effectuer ce geste (ce qu'on appelle un geste « identifiant »). La demande FR2214116 permet ainsi une solution d'identification ou d'authentification fiable, sécurisée et reproductible, en particulier pour preuve du consentement de l'utilisateur.

Un inconvénient de cette dernière solution est qu'elle reste mono facteur, et donc qu'elle ne permet pas une authentification « forte », qui implique l'utilisation d'un dispositif externe comme un terminal mobile ou un token physique.

En complément de la solution décrite dans la demande FR2214116, il serait ainsi souhaitable de disposer d'une solution de très haute sécurité qui reste aussi intuitive et facile à mettre en œuvre par l'utilisateur, par exemple ne nécessitant pas nécessairement d'enlever le casque VR.

### PRÉSENTATION DE L'INVENTION

La présente invention se rapporte donc selon un premier aspect à un dispositif d'authentification d'un utilisateur, associé de manière unique à l'utilisateur, caractérisé en ce qu'il comprend une surface tactile circulaire de détection de gestes de rotation, et est configuré pour transmettre des données représentatives d'une séquence de gestes de rotation réalisés par l'utilisateur sur ladite surface tactile circulaire, chaque geste de rotation étant défini par une position angulaire initiale, une position angulaire finale, et un sens de rotation.

Selon des caractéristiques avantageuses et non limitatives :
Le dispositif présente une forme de disque.

Ladite surface tactile circulaire s'étend circulairement autour d'un élément central.

Ladite surface tactile circulaire présente au moins un repère tactile.

Ladite surface tactile circulaire présente une pluralité de repères tactiles disposés à intervalles réguliers autour dudit élément central.

Ladite pluralité de repères est composée d'un unique repère principal et d'un ou plusieurs repères secondaires différents dudit repère principal.

Chaque repère tactile est un repère en relief.

Le dispositif est adapté pour un appariement avec un terminal mobile de l'utilisateur via une communication sans fil de courte portée, notamment Bluetooth.

Le dispositif comprend une zone lumineuse disposée autour de la surface tactile circulaire.

La zone lumineuse comprend un bandeau lumineux étendu s'illuminant au fur et à mesure de la progression d'un geste de rotation et/ou des sources lumineuses ponctuelles s'allumant à chaque geste de la séquence.

Selon un deuxième aspect, l'invention propose un procédé d'authentification d'un utilisateur, caractérisé en ce qu'il comprend la mise en œuvre d'étapes de :
(a) Transmission par le dispositif d'authentification dudit utilisateur selon le premier aspect, à un serveur, des données représentatives de ladite séquence de gestes de rotation réalisés par l'utilisateur sur la surface tactile circulaire ;
(b) Vérification par des moyens de traitement de données dudit serveur, desdites données représentatives de ladite séquence de gestes de rotation réalisés par l'utilisateur sur la surface tactile circulaire.

Selon des caractéristiques avantageuses et non limitatives :
La vérification de l'étape (b) est une comparaison de ladite séquence de gestes de rotation réalisés par l'utilisateur sur la surface tactile circulaire avec au moins une séquence de gestes de rotation attendue.

L'étape (a) comprend une sous-étape (a2) d'émission par les par moyens de traitement de données du serveur d'une invitation de l'utilisateur à réaliser ladite séquence de gestes de rotation sur la surface tactile circulaire.

L'utilisateur est un utilisateur d'un système de réalité virtuelle ou mixte connecté au server et comprenant des moyens d'affichage d'un espace immersif.

Le procédé comprend une étape (c) de mise en œuvre ou non d'une transaction initiée par ledit utilisateur (en particulier dans ledit espace immersif) en fonction du résultat de l'étape (b).

L'étape (a) comprend une sous-étape (a1) de réception par les moyens de traitement de données du serveur, d'une requête de validation de ladite transaction, en réponse à laquelle ladite invitation de l'utilisateur à réaliser ladite séquence de gestes de rotation sur la surface tactile circulaire est émise.

### PRÉSENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig. 1]la figure 1 est un schéma d'un système dans lequel est utilisé le dispositif d'authentification selon l'invention ;
[Fig. 2]la figure 2 représente un exemple de dispositif d'authentification selon l'invention ;
[Fig. 3]la figure 3 illustre schématiquement comment est défini un geste de rotation sur ledit dispositif d'authentification.
[Fig. 4]la figure 4 est un logigramme illustrant les étapes d'un mode de réalisation d'un procédé utilisant le dispositif d'authentification selon l'invention.

### DESCRIPTION DÉTAILLÉE

### Architecture

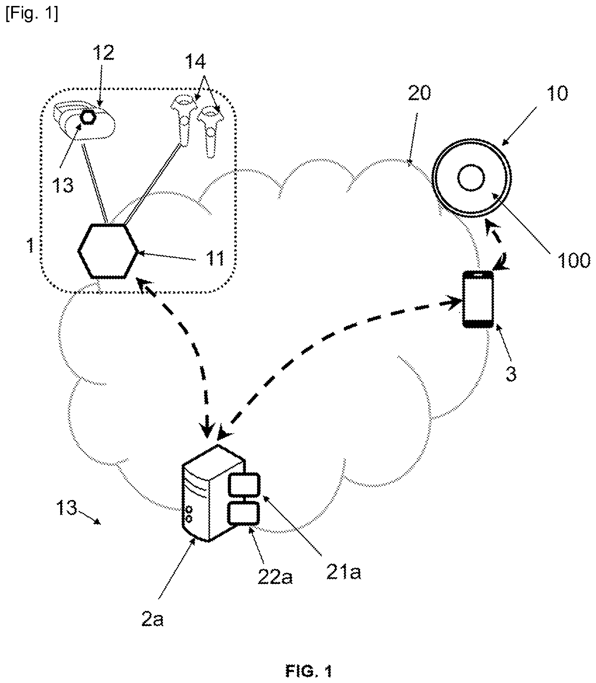

La présente invention concerne un dispositif d'authentification 10 d'un utilisateur, préférentiellement un utilisateur d'un système 1 de réalité virtuelle ou mixte tel que représenté sur la **figure 1****,** en particulier pour la mise en œuvre d'un procédé d'authentification de l'utilisateur, préférentiellement en vue d'une transaction dans un espace immersif auquel le système 1 permet d'accéder.

On notera que même si, comme on le verra, le présent dispositif 10 est particulièrement performant en réalité virtuelle/mixte, on n'est pas limité à cette application, et que l'on pourra utiliser le présent dispositif 10 pour toute authentification d'un utilisateur, par exemple pour valider une transaction dans un magasin, pour déverrouiller un équipement, accéder à un espace personnel dans une application, etc. Dans le contexte de la VR, le présent dispositif 10 pourra en outre être utilisé pour signer un contrat, transférer des droits ou encore autoriser l'accès d'un utilisateur à une salle virtuelle sécurisée (notamment personnelle).

Ledit dispositif d'authentification 10 est associé de manière unique à l'utilisateur (i.e. c'est un dispositif personnel) et est avantageusement connecté à un serveur 2, qui peut être confondu avec le système 1, ou distant et connecté par un réseau 20 tel que le réseau internet.

Le serveur 2 dispose de moyens de traitement de données 21 (typiquement un processeur) et de moyens de stockage de données 22 (une mémoire, par exemple un disque dur).

L'éventuel système 1 comprend des moyens d'affichage 12 dudit espace immersif (c'est-à-dire avec lequel l'utilisateur peut interagir, et dans lequel il est « plongé »), typiquement un casque, et des moyens de détection du mouvement dans ledit espace immersif 14, en général des contrôleurs (ou manettes) tenus par les mains et munis d'accéléromètres et/ou de gyromètres, ou alternativement des caméras externes fixes observant les mains.

Les différents équipements du système 1 (par exemple casque et contrôleurs) sont interconnectés de façon filaire ou sans-fil (par exemple en Bluetooth).

Ladite « réalité » est soit :
- virtuelle, c'est-à-dire que ledit espace immersif est complètement artificiel, ou
- mixte, c'est-à-dire seulement partiellement virtuelle, et ledit espace immersif superpose un environnement réel et un environnement virtuel.

Un système 1 de réalité mixte comprend en général, en plus des moyens d'affichage 12, une caméra filmant le monde réel en continu, le rendu des moyens d'affichage 12 incluant dans ce flux « réel » des éléments virtuels. Dans la suite de la présente description on prendra par commodité l'exemple de la réalité virtuelle, abréviée « VR », mais l'homme du métier pourra transposer l'environnement à la réalité mixte (MR).

De manière connue, dans tous les cas, les moyens d'affichage 12 sont couplés avec les mouvements du casque porté par l'utilisateur de sorte que l'affichage de l'environnement immersif évolue en fonction de ces mouvements de sorte à simuler la réalité. Pour ce faire, le système 1 comprend généralement des moyens de détection du mouvement du casque de l'utilisateur 13, par exemple à nouveau des accéléromètres ou des caméras soit externes observant la tête, soit fixées au casque et observant l'environnement.

Le système 1 comprend en outre des moyens de traitement de données 11 tel qu'un processeur, mettant en œuvre des applications dans ledit espace immersif. Par exemple, dans un jeu de sport, le contrôleur d'interactivité simule un ballon et l'appui sur un bouton correspond à une frappe dans le ballon.

### Principe

Le présent dispositif d'authentification personnel 10 vise à l'authentification de l'utilisateur grâce à une séquence de gestes de rotation réalisés par l'utilisateur sur ce dispositif 10, dit « séquence d'authentification », alternativement par exemple aux techniques connues comme la reconnaissance d'un geste ou la saisie d'un code. Comme l'on verra, une telle séquence permet en pratique bien plus de combinaisons qu'un code PIN, et très facile à mémoriser, et peut être réalisée intuitivement sans regarder, ce qui est très avantageux pour une application VR (pas besoin d'enlever le casque).

Ladite authentification est en particulier réalisée pour obtenir le consentement de l'utilisateur dans ledit espace immersif (i.e. confirmation). Le dispositif peut être utilisé à tout moment où l'identité de la personne qui utilise le système 1 peut devoir être vérifiée. Le cas d'espèce est une validation de transaction (si l'utilisateur achète un objet, réel ou virtuel, dans l'espace immersif).

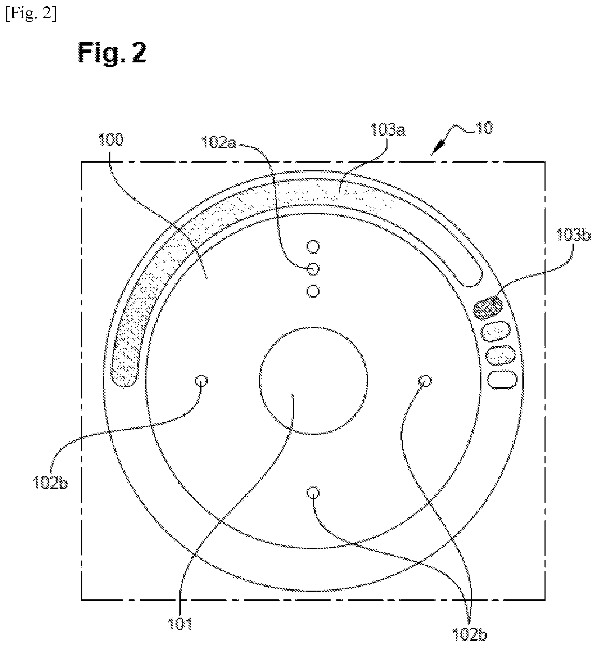

Par « geste de rotation », on entend un geste typiquement d'au moins un doigt (en général un ou deux doigts) ou de toute la main de l'utilisateur qui corresponde à un mouvement de rotation. A ce titre, le dispositif d'authentification 10 comprend une surface tactile circulaire 100 comme l'on voit dans l'exemple de la **figure 2****.**

Chaque geste de rotation est défini par une position angulaire initiale, une position angulaire finale, et un sens de rotation. Les avantages sont nombreux :
- le nombre de combinaison est très élevé, bien plus que pour un simple code PIN, et donc la sécurité est très forte ;
- les gestes de rotation peuvent être réalisés avec précision, même sans regarder et donc en gardant le casque.

Dans un premier mode de réalisation dit « discret », on a une pluralité de positions angulaires prédéfinies (un nombre N), et chaque position angulaire initiale/finale est choisie parmi l'une des positions angulaires prédéfinies. En d'autres termes, on a des secteurs élémentaires de largeur angulaire 360/N degrés numérotés de 1 à N. On a alors 2N² gestes possibles (on note qu'un geste avec position initiale et finales identique correspond à un tour complet), et les données descriptives d'un geste de rotation sont typiquement un triplet (nᵢ, n_{f}, s)∈[1;N]x[1;N]x{-1,+1} des identifiants des positions initiales et finales et d'un indicateur du sens de rotation (2 valeurs possibles pour les sens horaire et antihoraire, ici arbitrairement choisis à -1 et +1). Alternativement on peut simplement représenter le geste par un identifiant unique i∈[1;2N²].

De manière préférée, on a N≥4, et préférentiellement N est choisi parmi 4, 6, 8 et 12, ce qui permet des divisions intuitives du cercle.

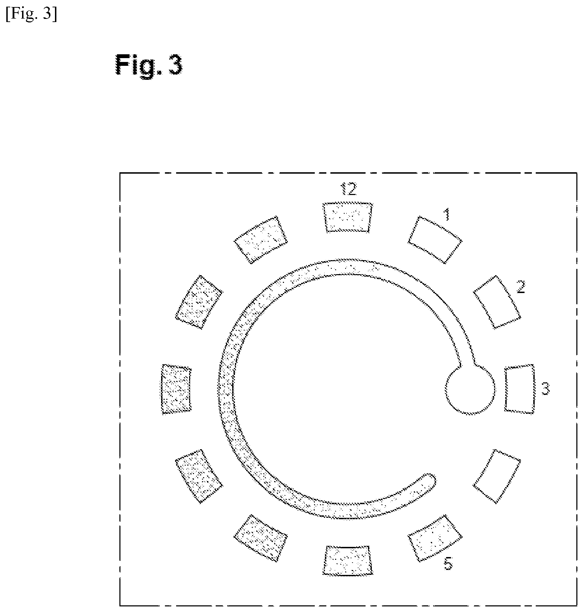

Dans l'exemple de la **figure 3****,** on a N=12, i.e. 12 secteurs de 30° numérotés de 1 à 12 dans le sens horaire, avec le secteur 12 au nord (le 1 au NNE, le 2 à l'ENE, le 3 à l'Est, etc.). On a 288 gestes possibles, la figure 3 représentant le geste 3→5 antihoraire (représenté par le triplet (3, 5, -1)). On comprend qu'il y a près de 7 milliards de séquences possibles de simplement quatre de ces gestes de rotation, ce qui garantit qu'il est impossible de trouver la séquence par chance.

Avec seulement N=4, on a déjà 32 gestes de rotation possibles, et une séquence de seulement deux gestes garantit déjà plus d'un millier de combinaisons.

Selon un mode de réalisation on peut autoriser plus d'un tour, et la valeur s est alors à valeur dans 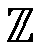 , avec le signe de s désignant le sens de rotation et |s-1| le nombre de tours complets supplémentaires. Par exemple :
- (3, 5, -2) correspondrait à une autre rotation de 3 vers 5 dans le sens antihoraire avec un tour complet réalisé (i.e. tour complet partant de 3 puis 3 vers 5).
- (3, 3, 2) correspondrait à deux tours complets horaires partant de 3 (i.e. tour complet partant de 3 puis 3 vers 3 qui est un deuxième tour complet).

En notant T le nombre maximal de tours complets autorisés (i.e. s∈[-(T+1);+(T+1)]), le nombre de gestes possibles passe à 2(T+1)N².

Dans un deuxième mode de réalisation dit « continu », on peut ne pas avoir de positions angulaires prédéfinies et simplement une mesure la plus précise possible des positions angulaires initiale et finale. En d'autres termes, les positions angulaires initiale et finale peuvent prendre toute valeur possible.

### Dispositif d'authentification

Comme expliqué le dispositif d'authentification 10 est un dispositif associé de manière unique à l'utilisateur et destiné à être connecté à un serveur 2, et sur lequel l'utilisateur peut réaliser une séquence de gestes de rotation.

Le dispositif 10 comprend une surface tactile circulaire 100 de détection des gestes de rotation, par exemple en un matériau souple tel que du silicone. On comprend que cette surface tactile n'est pas un écran.

En référence à la figure 2, ladite surface tactile circulaire 100 de détection des gestes de rotation s'étend avantageusement circulairement autour d'un élément central 101. En d'autres termes elle présente une forme sensiblement annulaire dont l'élément central 101 marque le centre, et on comprend qu'il est naturel de réaliser un geste de rotation sur une telle surface. L'ensemble du dispositif 10 présente ainsi une forme de disque avec un boitier de typiquement quelques centimètres de diamètre, et environ un centimètre d'épaisseur. Le boitier peut héberger en outre des moyens de traitement et une batterie dudit dispositif 10.

On notera que l'élément central 101 peut être un bouton utilisé notamment pour contrôler le dispositif 10, par exemple pour faire une action dans l'espace immersif, mais également pour l'allumer/l'éteindre (multiple appui rapide) ou déclencher un appariement (appui long).

En effet, le dispositif d'authentification 10 peut préférentiellement être apparié avec un terminal mobile 3 de l'utilisateur (en particulier via une communication sans fil de courte portée, notamment Bluetooth) via lequel il est connecté audit serveur 2, le terminal 3 permettant en effet une connexion au réseau 20 tel que le réseau internet. Le dispositif 10 peut d'ailleurs être fixé au terminal mobile 3, par exemple de manière magnétique, ce qui en permet éventuellement un rechargement par induction. Alternativement ou en complément, le dispositif 10 peut comprendre un port, par exemple USB, notamment sur le flanc du boitier.

L'élément central 101 peut attentivement ou en complément comprendre un moyen d'identification biométrique supplémentaire, par exemple un capteur d'empreinte digitale.

De manière à guider le geste, ladite surface tactile circulaire 100 de détection des gestes de rotation présente avantageusement au moins un repère tactile 102a, 102b, voire une pluralité de repères tactiles 102a, 102b disposés à intervalles réguliers autour dudit élément central 101, i.e. à des positions angulaires régulièrement réparties. Les repères peuvent être physiques, en particulier des repères en relief (qui peuvent être des picots, des creux, ou tout motif texturé), ou bien des repères simulés, par exemple avec un retour haptique (i.e. une vibration) déclenchée lorsque l'utilisateur atteint sur la surface 100 la position d'un de ces repères 102a, 102b.

Ainsi, l'utilisateur peut directement sentir la position de ce(s) repère(s) 102a, 102b et donc se positionner sur la surface 100 du dispositif 10 sans avoir besoin de regarder. En cas de plusieurs repères, l'utilisateur sait en les ressentant qu'il a parcouru une certaine étendue angulaire et donc contrôler son geste pour plus de précision.

De manière particulièrement préférée ladite pluralité de repères 102a, 102b est composée d'un unique repère principal 102a et d'un ou plusieurs repères secondaires 102b différents dudit repère principal 102a, de manière à des distinguer. Ainsi le repère principal permet d'orienter de manière absolue le dispositif 10 (en identifiant une direction de référence, par exemple le nord), et les autres permettent de contrôler le geste de rotation. Dans l'exemple de la figure 2, on a des repères physiques sur une surface tactile circulaire 100 dont un repère principal 102a avec trois picots, et trois repères secondaires 102b avec un seul picot.

On note que la présence de plusieurs repères 102a, 102b est particulièrement efficace en combinaison avec le mode de réalisation dans lequel on a N positions angulaires prédéfinies, puisque les repères peuvent être directement associés à certaines de ces positions angulaires prédéfinies.

Par exemple, en prenant la configuration à 12 positions angulaires prédéfinies de la figure 3, les repères de la figure 2 sont respectivement associés aux positions 12 (repère principal 102a), 3, 6 et 9 (repères secondaires 102b). Le geste 3→5 antihoraire de la figure 3 correspond à un départ du premier repère secondaire 102b après le repère principal 102a, avec un déplacement du doigt passant successivement par le repère principal 102a, et les deux autres repères secondaires 102b. Cela est très intuitif pour l'utilisateur.

En outre, le dispositif 10 peut comprendre une zone lumineuse 103a, 103b disposé autour de la surface 100. Cette zone lumineuse peut comprendre un bandeau lumineux 103a étendu (i.e. occupant au moins une partie de la circonférence de la surface 100) et/ou des sources lumineuses 103b ponctuelles

Le bandeau lumineux 103a peut s'illuminer au fur et à mesure de la progression d'un geste de rotation, et une nouvelle source lumineuse 103b peut s'allumer à chaque geste de la séquence. Ainsi, si l'utilisateur est perdu, il peut regarder à tout moment la zone lumineuse 103a, 103b pour savoir où il en est, et reprendre la séquence.

### Procédé

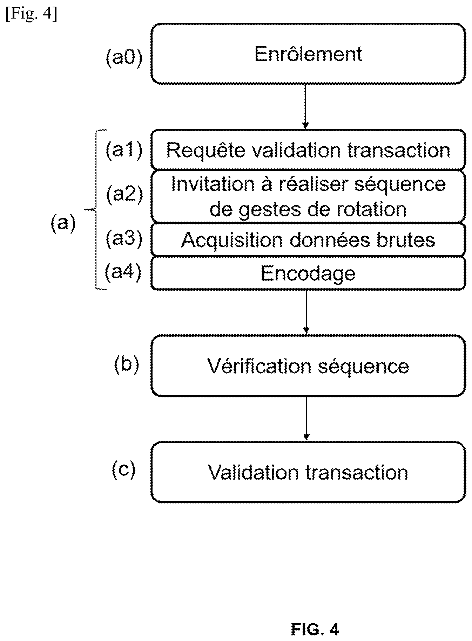

En référence à la **figure 4****,** l'invention concerne également un procédé d'authentification d'un utilisateur, utilisant le dispositif d'authentification 10 selon le premier aspect.

Le présent procédé commence par une étape (a) de transmission par le dispositif d'authentification 10 associé de manière unique à l'utilisateur, à destination du serveur 2, de données représentatives d'une séquence de gestes de rotation réalisés par l'utilisateur sur la surface tactile circulaire 100 dudit dispositif d'authentification 10.

On comprend qu'on a bien une authentification forte puisqu'on combine un facteur matériel (l'utilisateur prouve qu'il possède bien un dispositif d'authentification 10 spécifique, associé de manière unique avec lui) et un facteur mémoriel (la séquence de gestes de rotation). Si le serveur 2 recevait des données représentatives d'une séquence de gestes de rotation réalisés par l'utilisateur sur un autre dispositif d'authentification que celui qui est associé de manière unique, alors elles seraient ignorées et l'authentification serait rejetée.

On parle de séquence d'authentification « candidate » comme étant celle réalisée en direct par l'utilisateur (à l'instar d'un code saisi sur un clavier) et sur la base duquel on va tenter l'authentification, par opposition à des séquences d'authentification « de référence », en pratique celle(s) attendue(s).

A ce titre, l'étape (a) comprend préférentiellement une sous-étape notée (a4) d'encodage de cette séquence de gestes de rotation candidate, c'est-à-dire la génération desdites données représentatives de ladite séquence de gestes de rotation réalisés par l'utilisateur sur la surface tactile circulaire 100 à partir de données brutes acquises par le dispositif 10, i.e. la traduction des signaux électriques mesurés en un code tel qu'un vecteur de k triplets (nᵢ, n_{f}, s), où k est le nombre de gestes de la séquence. L'étape (a) comprend ainsi préférentiellement l'acquisition préalable (a3), par le dispositif 10, desdites données brutes, pendant que l'utilisateur réalise les gestes.

Dans une étape (b) suivante, les moyens de traitement 21 du serveur 2 authentifient ledit utilisateur en vérifiant lesdites données représentatives obtenues d'une séquence de gestes de rotation candidate (i.e. lesdites données représentatives de la séquence de gestes de rotation réalisés par l'utilisateur sur la surface tactile circulaire 100).

Plus précisément, ladite séquence de gestes de rotation réalisés par l'utilisateur sur la surface tactile circulaire 100 doit correspondre avec au moins une séquence d'authentification attendue.

Avantageusement, la séquence d'authentification attendue est la séquence d'authentification de référence de l'utilisateur, i.e. une séquence prédéfinie connue (et généralement préalablement choisie) par l'utilisateur.

A noter qu'il peut y avoir plusieurs séquences séquence d'authentification de référence, en particulier plus ou moins longues, correspondant à divers niveaux de sécurité possible.

Par exemple, pour une authentification avant une transaction au-delà d'un certain montant ou peut avoir une séquence de quatre gestes qui est attendue, alors que pour une simple vérification du consentement on peut avoir une séquence d'un seul geste visant à éviter une fausse manipulation de l'utilisateur. On peut également avoir un réglage manuel par l'utilisateur du niveau de sécurité souhaité.

En fonction de la transaction et/ou du niveau de sécurité, on a ainsi une séquence de référence qui est sélectionné comme la séquence « attendue », et elle est comparée avec la séquence de gestes de rotation réalisés par l'utilisateur sur la surface tactile circulaire 100. A noter qu'il peut y avoir plusieurs séquences attendues alternatives, en ce on peut prévoir qu'une séquence de niveau de sécurité de niveau élevé vaille séquence de niveau de sécurité plus bas : par exemple si on attendait la séquence de simple vérification du consentement (de 1 geste) et que l'utilisateur réalise la séquence d'authentification complète (4 gestes), alors il est authentifié.

Alternativement, la séquence d'authentification attendue est une séquence d'authentification générée par le serveur 2 (en particulier aléatoirement), et que l'utilisateur doit reproduire, dans une logique de type « challenge-réponse » (la séquence d'authentification attendue peut être considéré comme un mot de passe à usage unique, OTP), voir plus loin.

Dans tous les cas, quelle que soit la nature de la séquence d'authentification attendue, la vérification est similaire.

Selon un premier mode de réalisation, typiquement lorsque l'on a N positions angulaires possibles, on compare directement les données représentatives de ces deux séquences, i.e. leurs codes. On doit dans ce cas avoir une correspondance exacte, sinon c'est qu'au moins un geste est erroné.

Selon un deuxième mode de réalisation, typiquement en cas de positions angulaires à valeurs continues (par opposition à N positions angulaires possibles), on utilise un algorithme de « fuzzy matching », en particulier un modèle de classification capable de calculer un score de proximité entre la séquence candidate et la (ou chaque) séquence attendue et de comparer ce score avec un seuil d'authentification. En effet, dans un tel mode il est impossible de reproduire exactement la même séquence, et on vérifie juste que la séquence candidate est suffisamment similaire de la séquence attendue.

### Transaction & consentement

De manière préférée, le procédé s'inscrit dans un contexte de validation de transaction, et plus précisément du consentement de l'utilisateur à la mise en œuvre de ladite transaction.

Il comprend alors avantageusement une étape (c) de mise en œuvre ou non d'une transaction initiée par ledit utilisateur dans ledit espace immersif en fonction du résultat de l'étape (b), i.e. le résultat de la vérification de la séquence réalisée par ledit utilisateur, et donc son authentification.

En d'autres termes, si l'utilisateur a réalisé la séquence d'authentification attendue (ce qui signifie qu'il a bien donné son consentement), le résultat de la vérification est positif et la transaction est mise en œuvre. A l'inverse, si le résultat de la vérification est négatif, c'est que soit l'utilisateur n'a pas finalement pas donné son consentement (le système 1 a peut-être cru par erreur, à la suite d'une mauvaise manipulation de l'utilisateur, que ce dernier souhait mettre en œuvre une transaction) soit qu'un tiers a tenté d'usurper son identité en volant son dispositif d'authentification 10 (et donc que l'utilisateur en premier lieu n'a jamais donné son consentement), et la transaction n'est pas mise en œuvre.

On entendra « transaction » au sens large, c'est-à-dire possiblement paiement mais également signature d'un contrat, transferts de droits, autorisation d'accès à une salle virtuelle sécurisée etc.

De manière préférée, l'étape (a) comprend une sous-étape (a2) d'émission à destination dudit système 1 d'une invitation à réaliser la séquence de gestes de rotation candidate. On comprend que cette invitation s'adresse à l'utilisateur et est affichée (sous n'importe quelle forme) par les moyens 12.

Dans le mode de type « challenge-réponse » où la séquence d'authentification attendue est une séquence d'authentification générée par le serveur 2 que l'utilisateur doit reproduire, cette séquence d'authentification attendue est avantageusement présentée à l'utilisateur dans cette invitation, par exemple sous la forme de pictogrammes représentant les gestes comme dans la figure 3. Ainsi, l'invitation émise est plus précisément une invitation à reproduire une séquence de gestes de rotation donnée générée par le serveur 2.

Cette invitation peut être émise en réponse à une sous-étape (a1) de réception d'une requête de validation de ladite transaction, réception depuis le système 1 ou un autre serveur notamment de transaction (qui peut notamment être confondu à son tour avec le serveur 2).

Typiquement :
- L'utilisateur souhaite faire une transaction dans l'espace immersif, et réalise une action associée (comme par exemple prendre un objet virtuel)
- Le système 1 communique avec un serveur de transaction distant en lui indiquant que l'utilisateur souhaite mettre en œuvre une transaction ;
- Le serveur de transaction envoie au serveur 2 une requête de validation de la transaction, pour s'assurer que l'utilisateur donne bien son consentement (sous-étape (a1)) ;
- En réponse, le serveur 2 émet à destination du système 1 l'invitation à réaliser la séquence de gestes de rotation sur la surface tactile circulaire 100 de son dispositif d'authentification 10 (sous-étape (a2)). On comprend qu'en particulier cette invitation est interprétée par le système pour être comprise par l'utilisateur, par exemple en affichant un texte dans l'espace immersif (« *merci de valider la transaction en réalisant votre séquence de gestes de rotation* ») mais également avec un message sonore, etc.
- L'utilisateur utilise son dispositif d'authentification 10, et ce dernier acquiert les données brutes correspondantes (sous-étape (a3)) ;
- Le dispositif 10 encode les gestes (sous-étape (a4)), c'est-à-dire génère lesdites données représentatives de ladite séquence de gestes de rotation réalisée par l'utilisateur sur son dispositif d'authentification 10 candidat à partir des données brutes acquises, et les transmet au serveur 2 ;
- Le serveur 2 peut alors mettre en œuvre la vérification de ces données représentatives de ladite séquence de gestes de rotation candidate, de sorte à s'assurer que cette séquence d'authentification candidate coïncide avec une séquence d'authentification attendue (étape (b)) ;
- La transaction est validée si le résultat de la vérification desdites données représentatives d'une séquence de gestes de rotation obtenues est que ladite séquence d'authentification candidate coïncide avec la séquence d'authentification attendue (étape (c)), et le serveur 2 peut le notifier à l'éventuel serveur de transaction pour que ce dernier mette en œuvre la transaction.

### Enrôlement

Le procédé comprend avantageusement une étape préalable (a0) d'enrôlement pour générer lesdites données représentatives d'au moins une séquence de gestes de rotation de référence, pour l'utiliser en tant que séquence d'authentification attendue dans la vérification de l'étape (b).

Pour ce faire, on peut faire réaliser par l'utilisateur ladite séquence de gestes de rotation de référence sur ledit dispositif d'authentification 10 dans un environnement contrôlé, i.e. par exemple après l'avoir authentifié via un autre mode d'authentification existant (biométrie, code, utilisation du smartphone, etc.).

On a ainsi une étape (A) de transmission par le dispositif d'authentification 10, audit serveur 2, de données représentatives d'une séquence de gestes de rotation réalisés par l'utilisateur sur la surface tactile circulaire 100, qui est le pendant de l'étape (a).

On peut avoir les sous-étapes (A1), (A2), (A3) et (A4) homologues aux sous-étapes (a1), (a2), (a3) et (a4) de l'étape (a) :
(A1) réception d'une requête d'enrôlement d'au moins une séquence de gestes de rotation en tant que séquence d'authentification de référence, pour authentification.
(A2) émission à destination dudit système 1 d'une invitation à réaliser une ou plusieurs fois ladite séquence de gestes de rotation sur la surface tactile circulaire 100 de son dispositif 10 (on comprend qu'il s'agit ici pour l'utilisateur de choisir sa séquence, et il est préférable de la répéter pour être sûr que l'utilisateur soit sur qu'il n'a pas fait d'erreur).
(A3) Acquisition des données brutes de chaque séquence réalisée ;
(A4) Encodage de la séquence d'authentification de référence.

Dans une étape (B) qui est le pendant de l'étape (b), on configure l'algorithme de vérification, ou le cas échéant ou entraîne un éventuel modèle de classification.

## Revendications

1. Dispositif d'authentification (10) d'un utilisateur, associé de manière unique à l'utilisateur, **caractérisé en ce qu'**il comprend une surface tactile circulaire (100) de détection de gestes de rotation présentant au moins un repère tactile (102a, 102b), et est configuré pour transmettre des données représentatives d'une séquence de gestes de rotation réalisés par l'utilisateur sur ladite surface tactile circulaire (100), chaque geste de rotation étant défini par une position angulaire initiale, une position angulaire finale, et un sens de rotation.

2. Dispositif selon la revendication 1, présentant une forme de disque, et dans lequel ladite surface tactile circulaire (100) s'étend circulairement autour d'un élément central (101).

3. Dispositif selon la revendication 2, dans lequel ladite surface tactile circulaire (100) présente une pluralité de repères tactiles (102a, 102b) disposés à intervalles réguliers autour dudit élément central (101).

4. Dispositif selon la revendication 3, dans lequel ladite pluralité de repères (102a, 102b) est composée d'un unique repère principal (102a) et d'un ou plusieurs repères secondaires (102b) différents dudit repère principal (102a).

5. Dispositif selon l'une des revendications 2 à 4, dans lequel chaque repère tactile (102a, 102b) est un repère en relief.

6. Dispositif selon l'une des revendications 1 à 5, adapté pour un appariement avec un terminal mobile (3) de l'utilisateur via une communication sans fil de courte portée, notamment Bluetooth.

7. Dispositif selon l'une des revendications 1 à 6, comprenant une zone lumineuse (103a, 103b) disposée autour de la surface tactile circulaire (100).

8. Dispositif selon la revendication 7, dans lequel la zone lumineuse (103a, 103b) comprend un bandeau lumineux 103a étendu s'illuminant au fur et à mesure de la progression d'un geste de rotation et/ou des sources lumineuses (103b) ponctuelles s'allumant à chaque geste de la séquence.

9. Procédé d'authentification d'un utilisateur, **caractérisé en ce qu'**il comprend la mise en œuvre d'étapes de :
(a) Transmission par le dispositif d'authentification (10) dudit utilisateur selon une des revendications 1 à 8, à un serveur (2), des données représentatives de ladite séquence de gestes de rotation réalisés par l'utilisateur sur la surface tactile circulaire (100) ;
(b) Vérification par des moyens de traitement de données (21) dudit serveur (2), desdites données représentatives de ladite séquence de gestes de rotation réalisés par l'utilisateur sur la surface tactile circulaire (100).

10. Procédé selon la revendication 9, dans lequel la vérification de l'étape (b) est une comparaison de ladite séquence de gestes de rotation réalisés par l'utilisateur sur la surface tactile circulaire (100) avec au moins une séquence de gestes de rotation attendue.

11. Procédé selon la revendication 10, dans lequel l'étape (a) comprend une sous-étape (a2) d'émission par les par moyens de traitement de données (21) du serveur (2) d'une invitation de l'utilisateur à réaliser ladite séquence de gestes de rotation sur la surface tactile circulaire (100).

12. Procédé selon l'une des revendications 9 à 11, dans lequel l'utilisateur est un utilisateur d'un système (1) de réalité virtuelle ou mixte connecté au server (1) et comprenant des moyens d'affichage (12) d'un espace immersif.

13. Procédé selon l'une des revendications 9 à 12, comprenant une étape (c) de mise en œuvre ou non d'une transaction initiée par ledit utilisateur en fonction du résultat de l'étape (b).

14. Procédé selon les revendications 11 et 13 en combinaison, dans lequel l'étape (a) comprend une sous-étape (a1) de réception par les moyens de traitement de données (21) du serveur (2), d'une requête de validation de ladite transaction, en réponse à laquelle ladite invitation de l'utilisateur à réaliser ladite séquence de gestes de rotation sur la surface tactile circulaire (100) est émise.

## Patentansprüche

1. Authentifizierungsvorrichtung (10) für einen Benutzer, die dem Benutzer eindeutig zugeordnet ist, **dadurch gekennzeichnet, dass** sie eine kreisförmige Berührungsfläche (100) zur Erfassung von Drehgesten mit mindestens einem Berührungsmarker (102a, 102b) umfasst und so konfiguriert ist, dass sie Daten überträgt, die eine Abfolge von Drehgesten repräsentieren, die der Benutzer auf der kreisförmigen Berührungsfläche (100) ausführt, wobei jede Drehgeste durch eine Anfangswinkelposition, eine Endwinkelposition und eine Drehrichtung definiert ist.

2. Vorrichtung nach Anspruch 1, die eine Scheibenform aufweist, wobei sich die kreisförmige Berührungsfläche (100) kreisförmig um ein zentrales Element (101) erstreckt.

3. Vorrichtung nach Anspruch 2, wobei die kreisförmige Berührungsfläche (100) eine Vielzahl von Berührungsmarkern (102a, 102b) aufweist, die in regelmäßigen Abständen um das zentrale Element (101) angeordnet sind.

4. Vorrichtung nach Anspruch 3, wobei die mehreren Markierungen (102a, 102b) aus einer einzigen Hauptmarkierung (102a) und einer oder mehreren von der Hauptmarkierung (102a) verschiedenen Nebenmarkierungen (102b) bestehen.

5. Vorrichtung nach einem der Ansprüche 2 bis 4, wobei jede Berührungsmarkierung (102a, 102b) eine erhabene Markierung ist.

6. Vorrichtung nach einem der Ansprüche 1 bis 5, die zur Kopplung mit einem mobilen Endgerät (3) des Benutzers über eine drahtlose Nahbereichskommunikation, insbesondere Bluetooth, ausgelegt ist.

7. Vorrichtung nach einem der Ansprüche 1 bis 6, die einen um die kreisförmige Berührungsfläche (100) angeordneten Leuchtbereich (103a, 103b) umfasst.

8. Vorrichtung nach Anspruch 7, wobei der Leuchtbereich (103a, 103b) einen verlängerten Leuchtstreifen 103a, der im Verlauf einer Drehgeste aufleuchtet, und/oder Punktlichtquellen (103b), die bei jeder Geste der Abfolge aufleuchten, umfasst.

9. Verfahren zur Authentifizierung eines Benutzers, **dadurch gekennzeichnet, dass** es die Durchführung folgender Schritte umfasst:
(a) Übertragen von Daten, die die vom Benutzer auf der kreisförmigen Berührungsfläche (100) ausgeführte Abfolge von Drehgesten repräsentieren, durch die Authentifizierungsvorrichtung (10) des Benutzers gemäß einem der Ansprüche 1 bis 8 an einen Server (2);
(b) Überprüfung der Daten, die die vom Benutzer auf der kreisförmigen Berührungsfläche (100) ausgeführte Abfolge von Drehgesten repräsentieren, durch Datenverarbeitungsmittel (21) des Servers (2).

10. Verfahren nach Anspruch 9, wobei die Überprüfung in Schritt (b) einen Vergleich der vom Benutzer auf der kreisförmigen Berührungsfläche (100) ausgeführten Abfolge von Drehgesten mit mindestens einer erwarteten Abfolge von Drehgesten umfasst.

11. Verfahren nach Anspruch 10, wobei Schritt (a) einen Teilschritt (a2) umfasst, bei dem die Datenverarbeitungsmittel (21) des Servers (2) den Benutzer auffordern, die genannte Abfolge von Drehgesten auf der kreisförmigen Berührungsfläche (100) auszuführen.

12. Verfahren nach einem der Ansprüche 9 bis 11, wobei der Benutzer ein Benutzer eines Virtual- oder Mixed-Reality-Systems (1) ist, das mit dem Server (1) verbunden ist und Anzeigemittel (12) für einen immersiven Raum umfasst.

13. Verfahren nach einem der Ansprüche 9 bis 12, umfassend einen Schritt (c), bei dem eine von dem Benutzer initiierte Transaktion in Abhängigkeit vom Ergebnis von Schritt (b) durchgeführt wird oder nicht.

14. Verfahren nach den Ansprüchen 11 und 13 in Kombination, wobei Schritt (a) einen Teilschritt (a) umfasst, bei dem die Datenverarbeitungsmittel (21) des Servers (2) eine Anfrage zur Validierung der Transaktion empfangen, woraufhin die Aufforderung an den Benutzer, die Abfolge von Drehgesten auf der kreisförmigen Berührungsfläche (100) auszuführen, ausgegeben wird.

## Claims

1. An authentication device (10) of a user, uniquely associated with the user, **characterized in that** it comprises a circular touch surface (100) for detecting rotational gestures having at least one touch marker (102a, 102b), and is configured to transmit data representative of a sequence of rotational gestures performed by the user on said circular touch surface (100), each rotational gesture being defined by an initial angular position, a final angular position, and a direction of rotation.

2. The device according to claim 1, having a disc shape, and wherein said circular touch surface (100) extends circularly around a central element (101).

3. The device according to claim 2, wherein said circular touch surface (100) has a plurality of touch markers (102a, 102b) arranged at regular intervals around said central element (101).

4. The device according to claim 3, wherein said plurality of markers (102a, 102b) is composed of a single main marker (102a) and of one or several secondary markers (102b) different from said main marker (102a).

5. The device according to any of claims 2 to 4, wherein each touch marker (102a, 102b) is a raised marker.

6. The device according to any of claims 1 to 5, adapted for pairing with a mobile terminal (3) of the user via short-range wireless communication, in particular Bluetooth.

7. The device according to any of claims 1 to 6, comprising a light area (103a, 103b) arranged around the circular touch surface (100).

8. The device according to claim 7, wherein the light area (103a, 103b) comprises an extended light strip 103a lighting up as a rotational gesture progresses and/or point light sources (103b) lighting up with each gesture of the sequence.

9. A method for authenticating a user, **characterized in that** it comprises the implementation of steps of:
(a) Transmitting by the authentication device (10) of said user according to any of claims 1 to 8, to a server (2), data representative of said sequence of rotational gestures performed by the user on the circular touch surface (100);
(b) Verifying by data processing means (21) of said server (2), said data representative of said sequence of rotational gestures performed by the user on the circular touch surface (100).

10. The method according to claim 9, wherein the verification of step (b) is a comparison of said sequence of rotational gestures performed by the user on the circular touch surface (100) with at least one expected sequence of rotational gestures.

11. The method according to claim 10, wherein step (a) comprises a sub-step (a2) of issuing by the data processing means (21) of the server (2) an invitation to the user to perform said sequence of rotational gestures on the circular touch surface (100).

12. The method according to any of claims 9 to 11, wherein the user is a user of a virtual or mixed reality system (1) connected to the server (1) and comprising display means (12) of an immersive space.

13. The method according to any of claims 9 to 12, comprising a step (c) of implementing or not a transaction initiated by said user depending on the result of step (b).

14. The method according to claims 11 and 13 in combination, wherein step (a) comprises a sub-step (a) of receiving by the data processing means (21) of the server (2), a request to validate said transaction, in response to which said invitation of the user to perform said sequence of rotational gestures on the circular touch surface (100) is issued.
